# EUROPEAN PATENT APPLICATION

(11) **EP 4 564 528 A2**
(43) Date of publication of application: **04.06.2025**
(21) Application number: 24201666.5
(22) Date of filing: 20.09.2024
(51) Int. Cl.: H01M 10/613, H01M 10/6556, H01M 50/209

(54) **BATTERY PACK**

(30) Priority: 29.11.2023 CN 202323262303 U; 28.12.2023 WO PCT/CN2023/142798
(71) Applicant: Eve Energy Storage Co., Ltd, Wuhan, Hubei 430074 (CN)
(72) Inventor: LU, Shun, Wuhan, Hubei 430074 (CN)
(74) Representative: Murgitroyd & Company

(57) **Abstract**

The disclosure provides a battery pack including a box body (1), a battery module (2), a cell contact system (3), and multiple heat-conducting portions (4). The box body (1) is provided with an accommodating cavity (11); the battery module (2) is disposed in the accommodating cavity (11); the cell contact system (3) is disposed in the accommodating cavity (11) and connected to the battery module (2); the cell contact system (3) includes multiple busbars (31) and multiple insulating brackets (32) arranged at intervals; and each of the insulating brackets (32) is provided with one or more snap slot portions (33) recessed towards a first direction, and the busbars (31) are disposed in the one or more snap slot portions (33); and the heat-conducting portions (4) are disposed in the one or more snap slot portions (33) and connected to a side of the busbars (31) away from the battery module (2).

## Description

### TECHNICAL FIELD

The disclosure relates to the field of battery, and in particular, to a battery pack.

### BACKGROUND

Because a battery pack has larger charging and discharging power, a battery module in the battery pack will produce a lot of heat during the charging and discharging process, and the heat generated is difficult to release, resulting in a large heating of the battery module, which affects lifetime of the battery pack.

### TECHNICAL PROBLEM

At present, the heat dissipation of the battery pack is generally realized by setting one liquid cooling plate on the battery module. However, a heat-conducting area of the liquid cooling plate is limited, resulting in lower heat-conducting rate and poor heat-conducting effect, and the heat generated by the battery pack cannot be quickly conducted, affecting the lifetime and performance of the battery pack.

### TECHNICAL SOLUTIONS

Embodiments of the disclosure provide a battery pack, and a cell contact system in the battery pack includes multiple insulating brackets with a heat-conducting portion disposed thereon. Heat dissipation efficiency of the battery pack can be improved by setting the heat-conducting portion.

Embodiments of the disclosure provide a battery pack, which includes:
a box body provided with an accommodating cavity;
a battery module disposed in the accommodating cavity;
a cells contact system disposed in the accommodating cavity and connected to the battery module, in which the cells contact system includes multiple busbars and multiple insulating brackets, the multiple insulating brackets are arranged at intervals, each of the insulating brackets is provided with one or more snap slot portions recessed towards a first direction, and the busbars are disposed in the one or more snap slot portions; and
multiple heat-conducting portions disposed in the one or more snap slot portions and connected to a side of the busbars away from the battery module.

### BENEFICIAL EFFECT

In the disclosure, by setting one or more snap slot portions in multiple insulating brackets and placing busbars and heat-conducting portions in the snap slot portions, heat generated by a battery module can be transferred to the busbars, then transferred from the busbars to the heat-conducting portions to realize heat dissipation, so that heat dissipation efficiency of the battery pack can be improved through the heat-conducting portions.

### BRIEF DESCRIPTION OF THE DRAWINGS

FIG. 1 is a schematic structural diagram of a battery pack according to some embodiments of the disclosure.
FIG. 2 is a schematic structural diagram of a first liquid cooling plate according to some embodiments of the disclosure.
FIG. 3 is a schematic structural diagram of a second liquid cooling plate according to some embodiments of the disclosure.
FIG. 4 is a schematic structural diagram of a housing plate according to some embodiments of the disclosure.
FIGs. 5A-5E are schematic structural diagrams of a cells contact system according to some embodiments of the disclosure.

### Reference numerals:

100, battery pack; 1, box body; 11, accommodating cavity; 12, first liquid cooling plate; 121, first water inlet; 122, first water outlet; 123, liquid cooling channel; 1231, first water inlet channel; 1232, first water outlet channel; 13, second liquid cooling plate; 131, second water inlet; 132, second water outlet; 14, housing plate; 2, battery module; 3, cells contact system; 31, busbar; 32, insulating bracket; 321, first insulating sub-bracket; 3211/32A, first insulating plate; 3212/32B, second insulating plate; 3233/32C, third insulating plate; 3213a/32D, avoidance portion; 3214/32E, fourth insulating plate; 322, second insulating sub-bracket; 3221, pressure relief hole; 323, third insulating sub-bracket; 3231/32A, first insulating plate; 3232/32B, second insulating plate; 3233/32C, third insulating plate; 3233a/32D, avoidance portion; 3234/32E, fourth insulating plate; 33, snap slot portion; 331, through hole; 4, heat-conducting portion; 5, heat-conducting layer.

### DETAILED DESCRIPTION

In the description of the disclosure, it can be understood that the terms "on", "up", "down", and the like, indicate the orientation or position relationship based on the orientation or position relationship illustrated in the drawings, and are only for the convenience of describing the disclosure and simplifying the description, and do not indicate or imply that the device or the component referred to must have a particular orientation, be constructed and operated in a particular orientation, and therefore cannot be understood as imitations on the disclosure. In addition, the terms "first" and "second" are only used for descriptive purposes and cannot be understood as indicating or implying relative importance or implying the number of technical features indicated. Therefore, the features that are defined as "first" and "second" may explicitly or implicitly include one or more of the features described. In the description of the disclosure, the term "multiple" indicates two or more than two, unless otherwise specified.

The disclosure may repeat reference numerals and/or reference letters in different embodiments for the purpose of simplification and clarity, and does not indicate relationships between various embodiments and/or settings discussed.

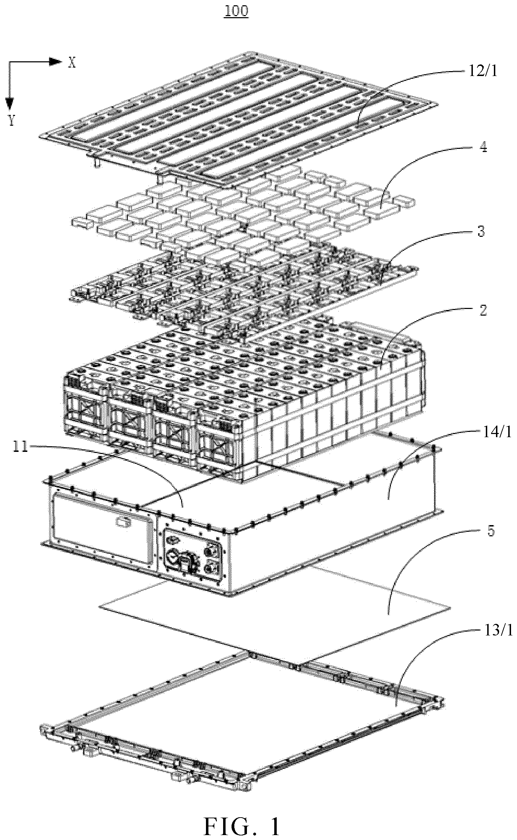

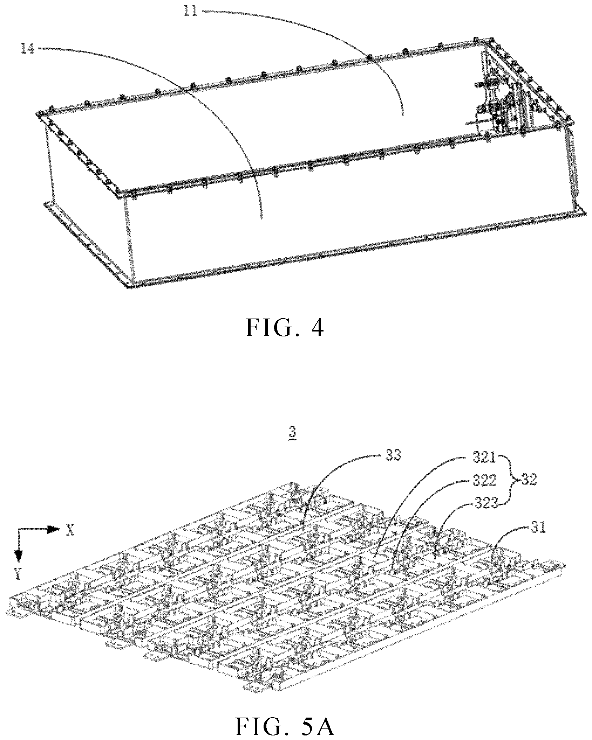

Referring to FIG. 1 and FIG. 5A, the disclosure provides a battery pack 100 including a box body 1, a battery module 2, a cells contact system 3, and multiple heat-conducting portions 4. The box body 1 is provided with an accommodating cavity 11. The battery module 2 is disposed in the accommodating cavity 11. The cells contact system 3 is disposed in the accommodating cavity 11 and connected to the battery module 2. The cells contact system 3 includes multiple busbars 31 and multiple insulating brackets 32. The multiple insulating brackets 32 are arranged at intervals. Each of the insulating brackets 32 is provided with one or more snap slot portions 33 recessed towards a first direction Y The busbars 31 are disposed in the snap slot portions 33. The heat-conducting portions 4 are disposed in the snap slot portions 33 and connected to a side of the busbars 31 away from the battery module 2.

Specifically, when the battery module 2 produces heat due to charging and discharging, the heat generated is transferred from multiple cells in the battery module 2 to the busbars 31, then transferred from the busbars 31 to the heat-conducting portions 4, so as to dissipate the heat generated by the battery module 2, thereby improving lifetime and safety of the battery pack 100.

In some embodiments, the battery module 2 includes multiple cells arranged in an array and integrally formed. The cells contact system 3 includes multiple busbars 31. An end of each of the busbars 31 is connected to a positive electrode of one of adjacent two cells, and another end of the each of the busbars 31 is connected to a negative electrode of another one of the adjacent two cells. The multiple busbars 31 connect the multiple cells in series or parallel into a single unit for signal transmission and parameter collection.

Specifically, each of the heat-conducting portions 4 is adapted to the shape of one of the snap slot portions 33. In some embodiments, when each of the snap slot portions 33 has a rectangular shape, each of the heat-conducting portions 4 is adapted to have a rectangular shape. In some embodiments, the heat-conducting portions 4 may be made from heat-conducting gel, but not limited thereto. It can be determined according to the embodiments. Furthermore, the snap slot portions 33 are also used for accommodating the busbars 31, so a shape of the busbars 31 can be designed according to the shape of the snap slot portions 33 or the shape of the snap slot portions 33 can be designed according to the shape of the busbars 31. For example, the shapes of the busbars 31 and the snap slot portions 33 may be square, triangular, circular, or other geometric shapes, but not limited thereto.

In some embodiments, the cells contact system (CCS) 3 further includes a flexible printed circuit (FPC), a collecting piece, and other components. The battery pack 100 further includes a battery management system (BMS). The cells contact system 3 is connected to the battery management system to realize signal transmission or information collection.

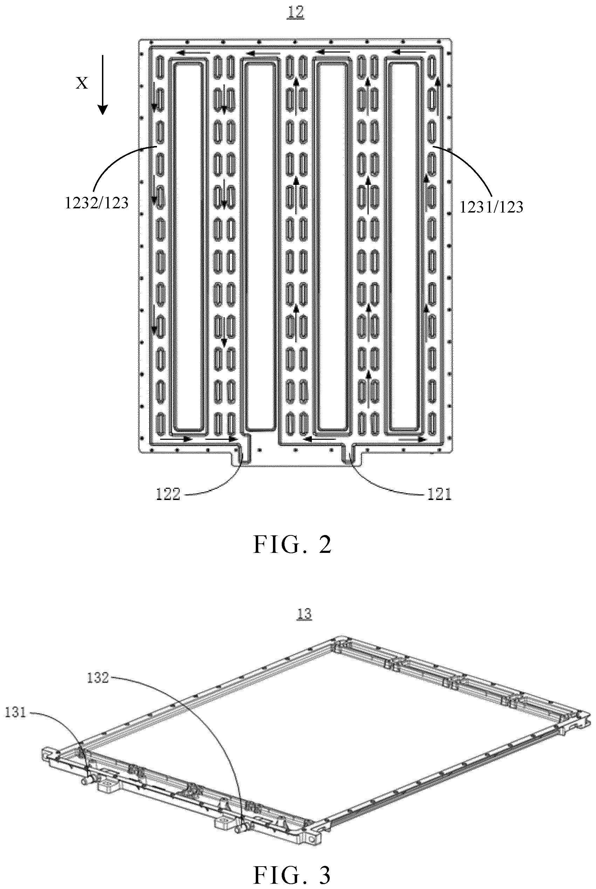

Referring to FIG. 1 and FIG. 2, in some embodiments, the box body 1 includes a first liquid cooling plate 12 disposed at a side of the cells contact system 3 away from the battery module 2. A side of the first liquid cooling plate 12 close to the cells contact system 3 is connected to the heat-conducting portions 4.

In some embodiments, an orthographic projection of the first liquid cooling plate 12 in the first direction Y covers that of the battery module 2, so that heat generated by the battery module 2 is transferred to the busbars 31, then transferred from the busbars 31 to the heat-conducting portions 4. Because the heat-conducting portions 4 are attached to the first liquid cooling plate 12, the heat can be transferred from the heat-conducting portions 4 to the first liquid cooling plate 12, thereby improving the heat dissipation efficiency of the battery pack 100, and ensuring the lifetime and safety of the battery pack 100.

Referring to FIG. 2, in some embodiments, the first liquid cooling plate 12 includes a first water inlet 121 and a first water outlet 122 disposed in the same side of the first liquid cooling plate 12. In some embodiments, the first liquid cooling plate 12 further includes multiple liquid cooling channels 123 configured to be filled with a cooling medium, including, but not limited to, water. The first liquid cooling plate 12 is used for heat dissipation. The multiple liquid cooling channels 123 are parallel to a direction perpendicular to a second direction X. The multiple liquid cooling channels 123 include multiple first water inlet channels 1231 and multiple first water outlet channels 1232. For example, the number of the first water inlet channels 1231 may be three, and the number of the first water outlet channels 1232 may be two. In the disclosure, there is no limitation on the numbers of the first water inlet channels 1231 and the first water outlet channels 1232, as long as the heat dissipation purpose can be realized. Moreover, the first water inlet channels 1231 are communicated with the first water inlet 121, the first water outlet channels 1232 are communicated with the first water outlet 122, and an end of the first water inlet channels 1231 away from the first water inlet 121 are communicated with an end of the first water outlet channels 1232 away from the first water outlet 122. The multiple first water inlet channels 1231, for example, are parallel with each other and used for allowing the simultaneous flow of a cooling medium. The cooling medium flows from the first water inlet channels 1231 to the first water outlet channels 1232, absorbs the heat generated by the battery module 2 during the flow process, and then flows out from the first water outlet 122, so as to realize the heat dissipation of the battery pack 100.

Referring to FIG. 1, FIG. 2, FIG. 3, and FIG. 4, in some embodiments, the box body 1 further includes a second liquid cooling plate 13 and multiple housing plates 14. The second liquid cooling plate 13 is opposite to the first liquid cooling plate 12. The multiple housing plates 14 are connected to each other. One end of the multiple housing plates 14 is connected to the second liquid cooling plate 13, and another end of the multiple housing plates 14 is connected to the first liquid cooling plate 12. The first liquid cooling plate 12, the second liquid cooling plate 13, and the multiple housing plates 14 form the accommodating cavity 11. Specifically, the second liquid cooling plate 13, and the first liquid cooling plate 12, and the housing plates 14 are connected, for example, through bolts. The second liquid cooling plate 13 is disposed at a side of the battery module 2 away from the cells contact system 3. The first liquid cooling plate 12 and the second liquid cooling plate 13 can dissipate heat from two ends of the battery module 2, improving the heat dissipation efficiency of the battery pack 100, and ensuring the lifetime and safety of the battery pack 100.

In some embodiments, the number of the housing plates 14 may be four, forming a rectangle shape adapted to the shape of the battery module 2. The number of the housing plates 14 may be two, six, eight, or the like, and is not limited thereto. In the disclosure, the multiple housing plates 14, the second liquid cooling plate 13, and the first liquid cooling plate 12 form the accommodating cavity 11, and the second liquid cooling plate 13 and the first liquid cooling plate 12 are used for heat dissipation to the battery module 2.

Referring to FIG. 3, in some embodiments, the second liquid cooling plate 13 includes a second water inlet 131 and a second water outlet 132. The second water inlet 131 and the second water outlet 132 are disposed in the same side of the second liquid cooling plate 13. The cooling medium flows in from the second water inlet 131 and flows out from the second water outlet 132. The second liquid cooling plate 13 includes multiple liquid cooling channels. The multiple liquid cooling channels may be connected end to end, and the cooling medium flows out from the second water outlet 132 along the liquid cooling channels to realize the heat dissipation effect.

As illustrated in FIG. 1, in some embodiments, the battery pack 100 further includes a heat-conducting layer 5 disposed between the battery module 2 and the second liquid cooling plate 13.

In some embodiments, the heat-conducting layer 5 may be made from heat-conducting adhesives, but not limited thereto. The heat-conducting layer 5 is disposed at a side of the battery module 2 away from the first liquid cooling plate 12, that is, between the battery module 2 and the second liquid cooling plate 13. The heat-conducting layer 5 is used for accelerating the transfer of heat, so that the heat can be transferred to the second liquid cooling plate 13 to realize the heat dissipation of the battery pack 100.

In some embodiments, a depth of one of the snap slot portions 33 in the first direction Y is greater than a height of corresponding one of the heat-conducting portions 4 in the first direction Y

Specifically, one of the snap slot portions 33 has a depth in the first direction Y to accommodate corresponding one of the busbars 31 and corresponding one of the heat-conducting portions 4. One of the heat-conducting portions 4 has a height in the first direction Y The height of one of the heat-conducting portions 4 cannot exceed the depth of corresponding one of the snap slot portions 33, which can be understood that the maximum height of one of the heat-conducting portions 4 in the first direction Y is not higher than the maximum depth of corresponding one of the snap slot portions 33 in the first direction Y

As illustrated in FIG. 5A, in some embodiments, each of the insulating brackets 32 includes a first insulating sub-bracket 321, a second insulating sub-bracket 322, and a third insulating sub-bracket 323. Opposite two ends of the second insulating sub-bracket 322 are connected to the first insulating sub-bracket 321 and the third insulating sub-bracket 323, respectively. The snap slot portions 33 are disposed in the first insulating sub-bracket 321 and the third insulating sub-bracket 323.

Specifically, the insulating brackets 32 are made from insulating materials, including, but not limited to, plastic. The multiple insulating brackets 32 are arranged at intervals to form a structure that can cover the battery module 2, so that each cell is connected to the busbars 31 in the insulating brackets 32, realizing the information transmission and heat transfer.

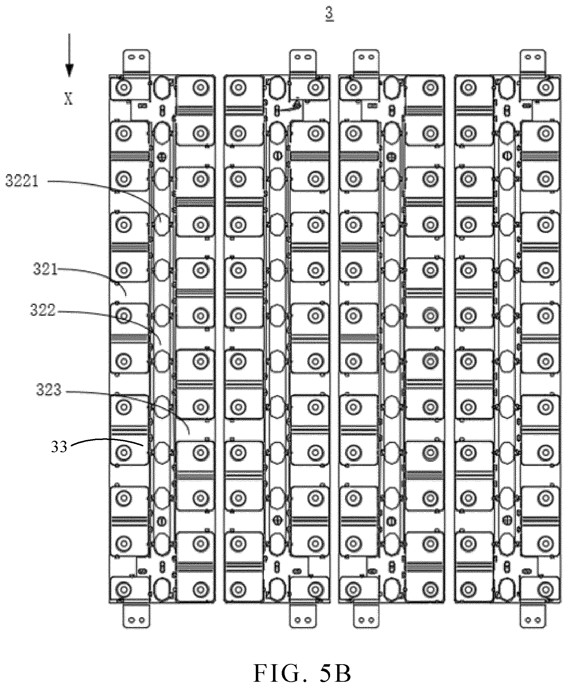

As illustrated in FIG. 5A and FIG. 5B, in some embodiments, the second insulating sub-bracket 322 is provided with multiple pressure relief holes 3221 penetrating the second insulating sub-bracket 322 in the first direction Y The multiple pressure relief holes 3221 are arranged at intervals in the second direction X and used for relieving pressure. The multiple pressure relief holes 3221 corresponds to the cells individually. When the battery pack 100 occurs thermal runaway, the cells release pressure through the pressure relief holes 3221.

In some embodiments, the multiple insulating brackets 32 can be an integrated structure to form a structure that can cover the battery module 2, so that each cell is connected to the busbars 31 in the insulating brackets 32, realizing the information transmission and heat transfer.

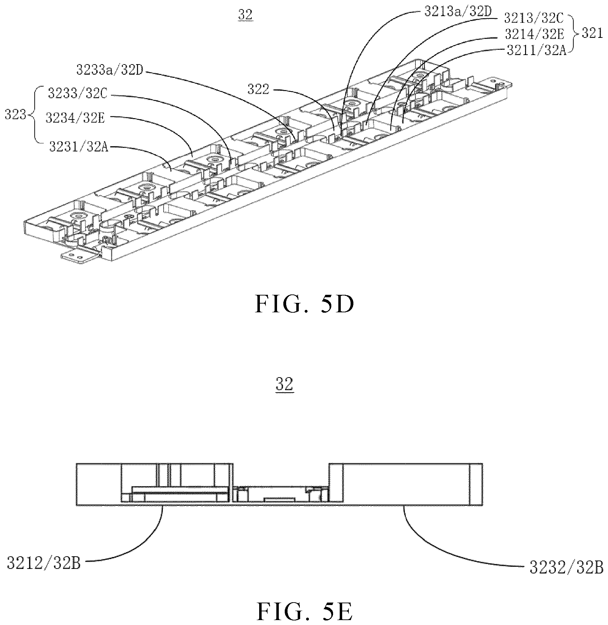

As illustrated in FIG. 5D and FIG. 5E, multiple first insulating plates 32A include a first insulating plate 3211 and a first insulating plate 3231, multiple second insulating plates 32B include a second insulating plate 3212 and a second insulating plate 3232, multiple third insulating plates 32C include a third insulating plate 3213 and a third insulating plate 3233, multiple avoidance portions 32D include an avoidance portion 3213a and an avoidance portion 3233a, and multiple fourth insulating plates 32E include a fourth insulating plate 3214 and a fourth insulating plate 3234.

As illustrated in FIGs. 5A-5E, in some embodiments, the first insulating sub-bracket 321 includes the first insulating plate 3211, the second insulating plate 3212, the third insulating plate 3213, and the fourth insulating plate 3214. The first insulating plate 3211 is disposed opposite to the second insulating plate 3212. An end of the third insulating plate 3213 is disposed on and surrounds the first insulating plate 3211, and another end of the third insulating plate 3213 is connected to the second insulating plate 3212 to form a cavity. The second insulating plate 3212 is provided with a snap slot hole extending in the first direction Y The fourth insulating plate 3214 is disposed in the cavity, an end of the fourth insulating plate 3214 surrounds the snap slot hole, and another end of the fourth insulating plate 3214 is connected to the first insulating plate 3211 to form one of the snap slot portions 33 in the first insulating sub-bracket 321.

Further, the third insulating sub-bracket 323 includes the first insulating plate 3231, the second insulating plate 3232, the third insulating plate 3233, and the fourth insulating plate 3234. The first insulating plate 3231 is disposed opposite to the second insulating plate 3232. An end of the third insulating plate 3233 is disposed on and surrounds the first insulating plate 3231, and another end of the third insulating plate 3233 is connected to the second insulating plate 3232 to form a cavity. The second insulating plate 3232 is provided with a snap slot hole extending in the first direction Y The fourth insulating plate 3234 is disposed in the cavity, an end of the fourth insulating plate 3234 surrounds the snap slot hole, and another end of the fourth insulating plate 3234 is connected to the first insulating plate 3231 to form one of the snap slot portions 33 in the third insulating sub-bracket 323.

In some embodiments, the cavities are filled with components, which can be understood as the first insulating sub-bracket 321 and the third insulating sub-bracket 323 served as insulating entities. The first insulating sub-bracket 321 and the third insulating sub-bracket 323 are provided with snap slot holes extending in the first direction Y, respectively. The snap slot holes are disposed in one end of the first insulating sub-bracket 321 and one end of the third insulating sub-bracket 323 close to the battery module 2. The snap slot holes penetrate or do not penetrate the first insulating sub-bracket 321 and the third insulating sub-bracket 323, and form one or more snap slot portions 33.

As illustrated in FIG. 5B, in some embodiments, there are multiple snap slot portions 33, and the multiple snap slot portions 33 are arranged at intervals in the first insulating sub-bracket 321 and the third insulating sub-bracket 323, respectively, in the second direction X perpendicular to the first direction Y

Specifically, the multiple snap slot portions 33 are arranged at intervals in the second direction X and corresponding to the busbars 31. An end of one of the busbars 31 is connected to a positive electrode of one of adjacent two cells, and another end of one of the busbars 31 is connected to a negative electrode of another one of the adjacent two cells. The spacing between adjacent two snap slot portions 33 is adapted to the positions of adj acent two cells and one of the busbars 31.

Furthermore, the busbars 31 include an output stage busbar and an input stage busbar. The output stage busbar and the input stage busbar are connected to one of the insulating brackets 32 and disposed in the snap slot portions 33. For example, the output stage busbar is disposed at an end of the first insulating sub-bracket 321, and the input stage busbar is disposed at an end of the third insulating sub-bracket 323. In some embodiments, the output stage busbar is disposed at one end of the first insulating sub-bracket 321, and the input stage busbar is disposed at one end of the third insulating sub-bracket 323 away from the first insulating sub-bracket 321.

In some embodiments, the snap slot portions 33 used for accommodating the output stage busbar and input stage busbar are adapted to shapes of the output stage busbar and the input stage busbar. A side of the fourth insulating plate 3214 and a side of the fourth insulating plate 3234 in the snap slot portions 33 away from the busbars 31 is provided with an avoidance space, respectively. A part of the output stage busbar and a part of the input stage busbar are both disposed in the avoidance spaces, and one end of the output stage busbar and one end of the input stage busbar extend outward, allowing the output stage busbar and the input stage busbar to be connected parallel to external components.

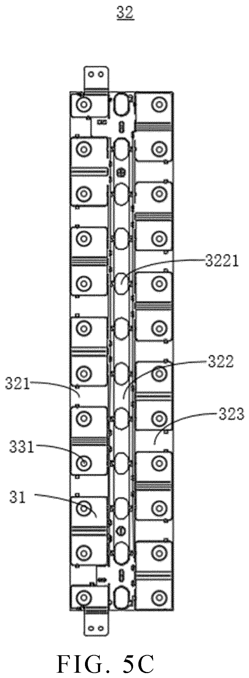

As illustrated in FIG. 5A and FIG. 5C, in some embodiments, the snap slot portions 33 are provided with multiple through holes 331 extending in the first direction Y, and the battery module 2 is connected to the busbars 31 disposed in the snap slot portions 33 through the through holes 331.

In some embodiments, the through holes 331 correspond to posts of the cells in position, but not limited thereto. The number of the through holes 331 corresponding to one cell may be two, so that the busbars 31 are connected to the cells by the through holes 331 to realize heat transfer.

In some embodiments, the third insulating plate 3213 of the first insulating sub-bracket 321 is provided with multiple avoidance portions 3213a extending in the first direction Y An end of the avoidance portion 3213a extends to the first insulating plate 3211, but does not penetrate the first insulating plate 3211, ensuring that the process can be formed and will not be deformed due to the contraction at some positions caused by injection molding. Moreover, the heat-conducting portions 4 may be made from viscous heat-conducting gel, and the multiple avoidance portions 3213a cannot affect the heat-conducting performance of the heat-conducting portions 4 and the lifetime and safety of the battery pack 100. Specifically, the multiple avoidance portions 3213a are arranged at intervals, and each of the avoidance portions 3213a has a width in the second direction X, and the width is designed to prevent excessive overflow of the heat-conducting portions 4.

Furthermore, the third insulating plate 3233 of the third insulating sub-bracket 323 is provided with multiple avoidance portions 3233a extending in the first direction Y The multiple avoidance portions 3233a extend to the first insulating plate 3231, and disposed at a side of the third insulating plate 3233 close to the second insulating sub-bracket 322 or away from the second insulating sub-bracket 322, ensuring that the process can be formed and will not be deformed due to the contraction at some positions caused by injection molding. Moreover, the heat-conducting portions 4 may be made from viscous heat-conducting gel, and the multiple avoidance portions 3233a cannot affect the heat-conducting performance of the heat-conducting portions 4 and the lifetime and safety of the battery pack 100. Specifically, the multiple avoidance portions 3233a are arranged at intervals, and each of the avoidance portions 3233a has a width in the second direction X, and the width is designed to prevent excessive overflow of the heat-conducting portions 4.

The avoidance portions 3213a and the avoidance portions 3233a are recessed towards the first direction Y The avoidance portions 3213a and the avoidance portions 3233a may extend to the first insulating plate 3211 and the first insulating plate 3231 under a maximum depression depth, and the specific depth is not limited in the disclosure.

The battery pack 100 according to some embodiments of the disclosure includes the box body 1, the battery module 2, the cells contact system 3, and multiple heat-conducting portions 4. The box body 1 is provided with the accommodating cavity 11; the battery module 2 is disposed in the accommodating cavity 11; the cells contact system 3 is disposed in the accommodating cavity 11 and connected to the battery module 2; the cells contact system 3 includes multiple busbars 31 and multiple insulating brackets 32, and the multiple insulating brackets 32 are arranged at intervals; each of the insulating brackets 32 is provided with multiple snap slot portions 33 recessed towards the first direction Y, and the busbars 31 are disposed in the snap slot portions 33; and the heat-conducting portions 4 are disposed in the snap slot portions 33 and connected to a side of the busbars 31 away from the battery module 2. By setting the snap slot portions 33 in the multiple insulating brackets 32 and placing the busbars 31 and the heat-conducting portions 4 in the snap slot portions 33, the heat generated by the battery module 2 can be transferred to the busbars 31, then transferred from the busbars 31 to the heat-conducting portions 4 to realize heat dissipation. Moreover, in some embodiments, the first liquid cooling plate 12 and the second liquid cooling plate 13 are provided at two opposite ends of the battery module 2, respectively, in conjunction with the heat-conducting portions 4 and the heat-conducting layer 5, to accelerate heat transfer. That is, the heat transferred to the heat-conducting portions 4 and the heat-conducting layer 5 is then transferred to the first liquid cooling plate 12 and the second liquid cooling plate 13, respectively, improving the heat dissipation efficiency of the battery pack 100, and ensuring the lifetime of the battery pack 100.

## Claims

1. A battery pack, **characterized in that** the battery pack comprises:
a box body (1) provided with an accommodating cavity (11);
a battery module (2) disposed in the accommodating cavity (11);
a cells contact system (3) disposed in the accommodating cavity (11) and connected to the battery module (2), wherein the cells contact system (3) comprises a plurality of busbars (31) and a plurality of insulating brackets (32), and the plurality of insulating brackets (32) are arranged at intervals; and each of the insulating brackets (32) is provided with one or more snap slot portions (33) recessed towards a first direction, and the busbars (31) are disposed in the one or more snap slot portions (33); and
a plurality of heat-conducting portions (4) disposed in the one or more snap slot portions (33) and connected to a side of the busbars (31) away from the battery module (2).

2. The battery pack of claim 1, **characterized in that** the box body (1) comprises a first liquid cooling plate (12) disposed at a side of the cells contact system (3) away from the battery module (2), and a side of the first liquid cooling plate (12) close to the cells contact system (3) is connected to the heat-conducting portions (4).

3. The battery pack of claim 2, **characterized in that** the box body (1) further comprises a second liquid cooling plate (13) and a plurality of housing plates (14); wherein the second liquid cooling plate (13) is disposed at a side of the battery module (2) away from the cells contact system (3) and opposite to the first liquid cooling plate (12); the plurality of housing plates (14) are connected to each other, and an end of the plurality of housing plates (14) is connected to the second liquid cooling plate (13), and another end of the plurality of housing plates (14) is connected to the first liquid cooling plate (12); and the first liquid cooling plate (12), the second liquid cooling plate (13), and the plurality of housing plates (14) form the accommodating cavity (11).

4. The battery pack of claim 3, **characterized in that** the battery pack further comprises a heat-conducting layer (5) disposed between the battery module (2) and the second liquid cooling plate (13).

5. The battery pack of any one of claims 1 to 4, **characterized in that** a depth of the one or more snap slot portions (33) is greater than a height of the heat-conducting portions (4) in the first direction.

6. The battery pack of any one of claims 1 to 4, **characterized in that** one of the insulating brackets (32) comprises a first insulating sub-bracket (321), a second insulating sub-bracket (322), and a third insulating sub-bracket (323), opposite two ends of the second insulating sub-bracket (322) are connected to the first insulating sub-bracket (321) and the third insulating sub-bracket (323), respectively, and the one or more snap slot portions (33) are disposed in the first insulating sub-bracket (321) and the third insulating sub-bracket (323).

7. The battery pack of claim 6, **characterized in that** both of the first insulating sub-bracket (321) and the third insulating sub-bracket (323) comprise a plurality of first insulating plates (32A), a plurality of second insulating plates (32B), a plurality of third insulating plates (32C), and a plurality of fourth insulating plates (32E); one of the first insulating plates (32A) and one of the second insulating plates (32B) are disposed opposite to each other; an end of one of the third insulating plates (32C) is disposed on and surrounds one of the first insulating plates (32A), and another end of the one of the third insulating plates (32C) is connected to one of the second insulating plates (32B) to form a cavity; and one of the second insulating plates (32B) is provided with a snap slot hole extending in the first direction; and one of the fourth insulating plates (32E) is disposed in the cavity, an end of the one of the fourth insulating plates (32E) surrounds the snap slot hole, and another end of the one of the fourth insulating plates (32E) is connected to one of the first insulating plates (32A) to form one of the one or more snap slot portions (33).

8. The battery pack of claim 6, **characterized in that** the number of the one or more snap slot portions (33) is plural, and a plurality of snap slot portions (33) are arranged at intervals in the first insulating sub-bracket (321) and the third insulating sub-bracket (323) in a second direction perpendicular to the first direction.

9. The battery pack of claim 8, **characterized in that** the snap slot portions (33) are provided with a plurality of through holes (331) extending in the first direction, and the battery module (2) is connected to the busbars (31) disposed in the snap slot portions (33) by the through holes (331).

10. The battery pack of claim 7, **characterized in that** the third insulating plates (32C) are provided with a plurality of avoidance portions (32D) extending in the first direction, and an end of one of the avoidance portions (32D) extends to one of the first insulating plates (32A).

11. The battery pack of any one of claims 1 to 10, **characterized in that** the box body (1) comprises a first liquid cooling plate (12) disposed at a side of the cells contact system (3) away from the battery module (2), and a side of the first liquid cooling plate (12) close to the cells contact system (3) is connected to the heat-conducting portions (4); and
the first liquid cooling plate (12) comprises a first water inlet (121) and a first water outlet (122) disposed in a same side of the first liquid cooling plate (12).

12. The battery pack of any one of claims 1 to 10, **characterized in that** the box body (1) comprises a first liquid cooling plate (12) disposed at a side of the cells contact system (3) away from the battery module (2), and a side of the first liquid cooling plate (12) close to the cells contact system (3) is connected to the heat-conducting portions (4); and
the first liquid cooling plate (12) comprises a first water inlet (121), a first water outlet (122), a plurality of first water inlet channels (1231), and a plurality of first water outlet channels (1232); the first water inlet (121) and the first water outlet (122) are disposed in a same side of the first liquid cooling plate (12); the first water inlet channels (1231) are communicated with the first water inlet (121), the first water outlet channels (1232) are communicated with the first water outlet (122), and an end of the first water inlet channels (1231) away from the first water inlet (121) is communicated with an end of the first water outlet channels (1232) away from the first water outlet (122).

13. The battery pack of any one of claims 1 to 10, **characterized in that** the box body (1) comprises a first liquid cooling plate (12), a second liquid cooling plate (13), and a plurality of housing plates (14);
the first liquid cooling plate (12) is disposed at a side of the cells contact system (3) away from the battery module (2), and a side of the first liquid cooling plate (12) close to the cells contact system (3) is connected to the heat-conducting portions (4);
the second liquid cooling plate (13) is disposed at a side of the battery module (2) away from the cells contact system (3) and opposite to the first liquid cooling plate (12); and the second liquid cooling plate (13) comprises a second water inlet (131) and a second water outlet (132) disposed in a same side of the second liquid cooling plate (13); and
the plurality of housing plates (14) are connected to each other, and an end of the plurality of housing plates (14) is connected to the second liquid cooling plate (13), and another end of the plurality of housing plates (14) is connected to the first liquid cooling plate (12); and the first liquid cooling plate (12), the second liquid cooling plate (13), and the plurality of housing plates (14) form the accommodating cavity (11).

14. The battery pack of any one of claims 1 to 10, **characterized in that** one of the insulating brackets (32) comprises a first insulating sub-bracket (321), a second insulating sub-bracket (322), and a third insulating sub-bracket (323), opposite two ends of the second insulating sub-bracket (322) are connected to the first insulating sub-bracket (321) and the third insulating sub-bracket (323), respectively, and the one or more snap slot portions (33) are disposed in the first insulating sub-bracket (321) and the third insulating sub-bracket (323); and
the second insulating sub-bracket (322) is provided with a plurality of pressure relief holes (3221) penetrating the second insulating sub-bracket (322) in the first direction, and the plurality of pressure relief holes (3221) are arranged at intervals in a second direction perpendicular to the first direction.

15. The battery pack of any one of claims 1 to 10, **characterized in that** one of the insulating brackets (32) comprises a first insulating sub-bracket (321), a second insulating sub-bracket (322), and a third insulating sub-bracket (323), opposite two ends of the second insulating sub-bracket (322) are connected to the first insulating sub-bracket (321) and the third insulating sub-bracket (323), respectively, and the one or more snap slot portions (33) are disposed in the first insulating sub-bracket (321) and the third insulating sub-bracket (323); and
one of the insulating brackets (32) comprises a plurality of first insulating plates (3211, 3231), a plurality of second insulating plates (3212, 3232), a plurality of third insulating plates (3213, 3233), and a plurality of fourth insulating plates (3214, 3234);
the first insulating sub-bracket 321 comprises a first insulating plate (3211) of the first insulating plates (3211, 3231), a second insulating plate (3212) of the second insulating plates (3212, 3232), a third insulating plate (3213) of the third insulating plates (3213, 3233), and a fourth insulating plate (3214) of the fourth insulating plates (3214, 3234);
the first insulating plate (3211) is disposed opposite to the second insulating plate (3212); an end of the third insulating plate (3213) is disposed on and surrounds the first insulating plate (3211), another end of the third insulating plate (3213) is connected to the second insulating plate (3212) to form a cavity; the second insulating plate (3212) is provided with a snap slot hole extending along the first direction; and the fourth insulating plate (3214) is disposed in the cavity, an end of the fourth insulating plate (3214) surrounds the snap slot hole, and another end of the fourth insulating plate (3214) is connected to the first insulating plate (3211) to form one of the one or more snap slot portions (33); and
the third insulating sub-bracket (323) comprises a first insulating plate (3231) of the first insulating plates (3211, 3231), a second insulating plate (3232) of the second insulating plates (3212, 3232), a third insulating plate (3233) of the third insulating plates (3213, 3233), and a fourth insulating plate (3234) of the fourth insulating plates (3214, 3234); the first insulating plate (3231) is disposed opposite to the second insulating plate (3232); an end of the third insulating plate (3233) is disposed on and surrounds the first insulating plate (3231), and another end of the third insulating plate (3233) is connected to the second insulating plate (3232) to form a cavity; the second insulating plate (3232) is provided with a snap slot hole extending along the first direction; and the fourth insulating plate (3234) is disposed in the cavity, an end of the fourth insulating plate (3234) surrounds the snap slot hole, and another end of the fourth insulating plate (3234) is connected to the first insulating plate (3231) to form one of the one or more snap slot portions (33).
